# EUROPÄISCHE PATENTSCHRIFT

(11) **EP 4 003 054 B1**
(45) Veröffentlichungstag und Bekanntmachung des Hinweises auf die Patenterteilung: **20.09.2023**
(21) Anmeldenummer: 20734917.6
(22) Anmeldetag: 25.06.2020
(51) Int. Cl.: A23K 50/75, A23K 20/142, A23K 20/105

(54) **VERWENDUNG EINER ZUSAMMENSETZUNG ZUR REDUZIERUNG DER FEUCHTIGKEIT UND DES STICKSTOFFGEHALTS IN FAECES VON GEFLÜGEL**
USE OF A COMPOSITION FOR REDUCING MOISTURE AND NITROGEN CONTENT OF POULTRY FECES
UTILISATION D'UNE COMPOSITION POUR RÉDUIRE LA TENEUR EN HUMIDITÉ ET EN AZOTE DE SELLES DE VOLAILLE

(30) Priorität: 26.07.2019 DE 102019120249
(43) Veröffentlichungstag der Anmeldung: 01.06.2022
(73) Patentinhaber: Alzchem Trostberg GmbH, 83308 Trostberg (DE)
(72) Erfinder: SANS, Jürgen, 83308 Trostberg (DE)
(74) Vertreter: Weickmann & Weickmann PartmbB
(86) Internationale Anmeldenummer: PCT/EP2020/067847
(87) Internationale Veröffentlichungsnummer: WO 2021/018486

(56) Entgegenhaltungen:
- CN-A- 106 615 933
- CN-A- 109 315 629
- CN-A- 109 315 630
- US-A- 5 516 798
- US-B2- 10 471 133
- AMIRI MASOUMEH ET AL: "Efficacy of guanidinoacetic acid at different dietary crude protein levels on growth performance, stress indicators, antioxidant status, and intestinal morphology in broiler chickens subjected to cyclic heat stress", ANIMAL FEED SCIENCE AND TECHNOLOGY, ELSEVIER, AMSTERDAM, NL, Bd. 254, 26. Juni 2019 (2019-06-26), XP085797911, ISSN: 0377-8401, DOI: 10.1016/J.ANIFEEDSCI.2019.114208 [gefunden am 2019-06-26]
- H J Almquist ET AL: "CREATINE FORMATION IN THE CHICK", Journal of Biological Chemistry, 1. Januar 1942 (1942-01-01), XP55731067, Gefunden im Internet: URL:https://www.jbc.org/content/141/2/365. full.pdf [gefunden am 2020-09-16]
- NAHM ET AL: "Feed formulations to reduce N excretion and ammonia emission from poultry manure", BIORESOURCE TECHNOLOGY, ELSEVIER, AMSTERDAM, NL, vol. 98, no. 12, 19 March 2007 (2007-03-19), pages 2282-2300, XP005932837, ISSN: 0960-8524, DOI: 10.1016/J.BIORTECH.2006.07.039

## Beschreibung

Die vorliegende Erfindung betrifft die Verwendung einer Zusammensetzung enthaltend Guanidinoessigsäure und Glycin zur Reduzierung der Feuchtigkeit in Faeces von Geflügel und/oder zur Reduzierung des Stickstoffgehaltes in Faeces von Geflügel.

Bei der Produktion von Nutztieren fallen Faeces verschiedener Art an. Im Unterschied zu Säugetieren, bei denen Faeces in zwei verschiedenen Arten anfallen, nämlich in flüssiger und fester-pastöser Form (Urin und Faeces im engeren Sinn), entfallen bei Vögeln die vollständig flüssigen Ausscheidungen. Ein wasserarmer Harn wird mit den Faeces aus der sogenannten Kloake in Form von festen-pastösen Faeces ausgeschieden. Je nach Haltungsbedingungen können diese Faeces vermischt mit Einstreu vorliegen.

US 5,516,798 A beschreibt ein Verfahren zur Behandlung von Diarrhoe bei Warmblütern und insbesondere bei Hühnern. Die Behandlungsmethode umfasst die Verabreichung einer Verbindung aus der Gruppe der Methylamine, insbesondere Betain.

CN 109315629 A beschreibt ein Mittel zur Verminderung von Transportstress von Geflügel vor dem Schlachten umfassend u.a. Glukose, Glycinacetat, Glutamin, Theanin, Betain, Ascorbinsäure, Tannin und Natriumcitrat.

Ein Problem bei der Tierhaltung sind große Mengen an Faeces, die entsorgt werden müssen und für die Entsorgungskosten anfallen können [Landbauforschung - vTI Agriculture and Forestry Research, Sonderheft 322 (2008), www.topagrar.com/.../Home-top-News-Die-Guelle-Kosten-explodieren-1122110]. Hierbei sind auch die Transportkosten ein wichtiger Einflussfaktor.

Ein weiteres Problem ist ein Ausbringungsverbot für Faeces in der Frostperiode, welches behördlich in vielen Ländern verordnet ist fhttps://www.landwirtschaftskammer.de/landwirtschaft/ackerbau/duengung/guelle/ve rordnung/sperrfrist.htm]. Dies bringt Anforderungen an die Größe der FaecesLagerstätten mit sich.

Weiterhin sind die auftretenden Geruchsbelästigungen, die bei Lagerung, Transport und Ausbringung von Gülle bestehen problematisch [https://www.lwk-niedersachsen.de/index.cfm/portal/6/nav/348/article/21682.html]. Diesen Phänomenen kann begegnet werden, indem folgende Verfahren oder Geräte eingesetzt werden:
A) Gülleseparatoren, die vorwiegend in der Schweine- und Rinderhaltung eingesetzt werden und eine Trennung in einen Flüssiganteil- und einen Feststoffanteil mit sich bringen. Beide Phasen werden dann getrennt weiter behandelt. Die feste Phase kann kompostiert werden oder getrocknet und thermisch genutzt werden. Für die thermische Nutzung sind spezielle Verbrennungsöfen beschrieben (EP 2249080 A1). Die flüssige Phase wird auf landwirtschaftliche Flächen ausgebracht oder kann weiter eingeengt werden.
B) Gülle wird eingedampft und der entweichende Ammoniak aufgefangen und kann beispielsweise in Form von Ammoniumsulfat vermarktet werden.
C) In DE 102010033251 A1 ist ein Verfahren beschrieben, in dem Gülle in Ammoniumcarbonat, Feststoffdünger und Brauch-/Trinkwasser umgewandelt wird.
D) Gülle und Geflügelkot können in Biogasanlagen vergoren werden (WO 2013/152266 A2, EP 1589095 B1)
E) Für die Trocknung von Hühnerkot sind spezielle Verfahren und Vorrichtungen beschrieben (DE 19851793 A1).

Nachteilig an allen Verfahren ist ein hoher apparativer Aufwand zur Behandlung von Faeces. Der Anfall an Faeces am Entstehungsort wird nicht vermindert.

Ein weiteres Problem bei der Tierhaltung sind die Emissionen von umweltrelevanten Schadgasen wie Ammoniak, Methan und Kohlendioxid (CO₂) aus den Faeces. Ammoniak entsteht hierbei durch den Abbau von Stickstoff-haltigen Verbindungen, z. B. Aminosäuren, die zum größten Teil aus der Nahrung der Tiere stammen und im Körper der Tiere nicht vollständig verwertet werden. Typische Stickstoffgehalte, nachfolgend auch N-Gehalte genannt, von Faeces sind in Tabelle 1 aufgeführt.

**Tabelle 1: Durchschnittliche Stickstoffgehalte von Faeces aus der Tierhaltung gemäß Landwirtschaftskammer Nordrhein-Westfalen, Stand 2014**

| | Trockensubstanz [%] | Gesamt-Stickstoff [kg/to] |
|---|---|---|
| Rindermist | 23 | 5,6 |
| Gänsemist | 30 | 8 |
| Putenmist | 50 | 19,1 |
| Hühner- & Hähnchenmist I | 30 | 18,1 |
| Hühner- & Hähnchenmist II | 60 | 29,9 |
| Hühnerfrischkot | 28 | 17 |
| Hühnertrockenkot | 50 | 25,5 |
| Milchvieh- & Rindergülle I | 6 | 3,2 |
| Milchvieh- & Rindergülle II | 10 | 4,5 |
| Mastschweingülle I | 3 | 4,3 |
| Mastschweingülle II | 7 | 6,5 |

Die Werte wurden aus verschiedenen Betrieben erhoben. Die starken Schwankungen bei Hühner- & Hähnchenmist, bei Milchvieh- & Rindergülle und Mastschweingülle resultieren aus den unterschiedlichen Fütterungs- und Haltungsbedingungen.

In 2014 wurden in Deutschland 740.000 Tonnen Ammoniak emittiert. Die von der Economic Commission for Europe, UNECE, für 2010 geforderte Höchstmenge von 550.000 Tonnen Ammoniak wurde damit bei Weitem überschritten. Bis zu 95 % der Ammoniak-Emissionen werden durch die Landwirtschaft verursacht (http://www.umweltbundesamt.de/daten/luftbelastung/luftschadstoff-emissionen-in-deutschland/ammoniak-emissionen#textpart-1). Die Hälfte der Emissionen resultiert aus der Ausbringung von organischem Dünger, wie Mist oder Gülle (https://www.lwk-niedersachsen.de/index.cfm/portal/6/nav/348/article/21682.html).

Die Emission von Ammoniak stellt aufgrund der Umwandlung von Ammoniak in Lachgas, das eine fast 300 mal höhere Treibhauswirksamkeit als Kohlendioxid (CO₂) hat und eine mittlere Verweildauer in der Natur von 114 Jahren besitzt, ein ernsthaftes Klimaproblem dar. Technisch mögliche Maßnahmen zur Reduktion der Ammoniakemission aus Faeces sind:
A) Emissionsarme Ausbringung von Faeces
B) Unmittelbare Einarbeitung von Faeces in den Boden
C) Abdeckung von Faeceslagerstätten
D) Ausbringung von Faeces mit Nitrifikationsinhibitoren

Nachteilig an den oben genannten Verfahren ist, dass die getroffenen Maßnahmen erst am Ende ansetzen, nicht aber den Stickstoff-Gehalt (N-Gehalt) in den Faeces reduzieren.

Ein weiteres Problem des Stickstoff-Gehaltes in den Faeces ist die gesetzlich eingeführte Reglementierung der maximal erlaubten Stickstoff-Menge pro Ackerfläche. Stickstoff aus allen Arten von Gülle wird mit eingerechnet. Da in der modernen Landwirtschaft die Erzeuger von Futter oft nicht auch Erzeuger von Fleisch sind, verfügt der Fleischerzeuger oft nicht über ausreichend Ackerfläche, um die Ausscheidungen der Tiere auszubringen. Dies hat zur Folge, dass für die Abnahme von Faeces bezahlt wird. Faeces, die eigentlich durch ihren Stickstoffgehalt einen Wert besitzen sollten, haben durch die gesetzliche Regelung einen negativen Marktwert. Nachteilig an den Stickstoffverbindungen in den Faeces ist zudem, dass der Stickstoff in verschiedener Weise gebunden ist und entweder zu schnell oder zu langsam für die Pflanze freigesetzt wird. Faeces von Geflügel haben große Mengen Stickstoff in Form von Harnsäure gebunden. Dies kann dazu führen, dass der Stickstoff in den Faeces auf die erlaubte Stickstoffmenge angerechnet wird, der Stickstoff jedoch nicht von den Pflanzen genutzt werden kann.

Im Zusammenhang mit dem Auftreten bzw. Anfallen von Faeces besteht zudem das Problem, dass bei zu feuchten Haltungsbedingungen, z. B. durch Verwendung von nasser Einstreu, eine Entzündung der Haut der Tiere beobachtet wird. Zudem kann das Wachstum der Tiere beeinträchtigt werden (M.F. Martland, Avian Pathology, 14 (1985) 353 - 364; Ulcerative Dermatitis in Broiler Chickens: The Effect of Wet Litter; M.F. Martland, Avian Pathology, 13 (1984) 241 - 252; Wet Litter as a Cause of Plantar Pododermatitis Leading to Foot Ulceration and Lameness in Fattening Turkeys).

Auch durch zu flüssige Faeces kann es im Stall zu einer Nässe im Aufenthaltsbereich der Tiere kommen. Flüssige Faeces können auch bei gesunden Tieren auftreten. Umstallung, Futterwechsel, erhöhte Außentemperaturen, Grünfutter sind beispielsweise Gründe für flüssigere Faeces.

Ein weiterer Nachteil von zu feuchtem Vogelkot ist die schlechtere mechanische Handhabung. Die mechanische Reinigung der Ställe bei feuchtem Kot ist aufwändiger als bei trockenem Kot, da feuchter Kot verklebt und schlechter von Wänden und Böden entfernt werden kann und auch beim Abladen vom Transporter Probleme resultieren.

Zur Verminderung der Feuchtigkeit im Aufenthaltsbereich der Tiere gibt es gemäß dem Stand der Technik verschiedene Lösungsmöglichkeiten. Ziel ist dabei, dass bei hoher Haltungsdichte die schädlichen Auswirkungen von Faeces auf die Tiere vermieden oder zumindest weitgehend verringert werden, die Entsorgungskosten gering sind, die Stallreinigung einfach ist und die Faeces gut transportierbar sind:
A) Es wird vorwiegend trockener Einstreu verwendet
B) Der Einstreu wird regelmäßig entfernt und erneuert
C) Es werden Teil- oder Vollspaltenböden bei der Haltung von Rindern und Schweinen verwendet, die regelmäßig gereinigt und desinfiziert werden. Flüssige Ausscheidungen können gut aus dem Spaltenboden ablaufen.
D) Bei der Bodenhaltung von Hühnern kann in einem Teil des Stalles ein Kotbrett oder ein Kotbunker verwendet werden, um die Ausscheidungen vom Tier zu entfernen.
E) Bei der Käfighaltung von Hühnern fällt der Kot durch den Gitterboden und ist somit nicht mehr für das Tier zu erreichen.
F) Zugabe von Bentonit zum Futter reduziert unter anderem die Feuchtigkeit des Kotes [z.B. J.H. Quisenberry, Clays and Clay Minerals, 1968, Vol. 16, 267-270]

Nachteilig an den Verfahren gemäß dem Stand der Technik ist, dass die verwendeten Verfahren arbeitsaufwendig sind und die Feuchtigkeit im Kot per se nicht reduziert wird, sondern nur die Kontaktwahrscheinlichkeit mit dem feuchten Kot reduziert wird. Die Mindestmenge an Einstreu muss an die zu erwartende Feuchtigkeitsmenge angepasst sein. Bei geringerer Feuchtigkeit kann weniger Einstreu verwendet werden und dadurch sowohl die Kosten für die Einstreu als auch die Kosten für die Entsorgung des Einstreus nach Benutzung reduziert werden. Die oben genannten Verfahren wirken daher nur teilweise und zielen nur auf eine Verminderung der Kontaktmöglichkeiten mit feuchtem Kot hin. Nachteilig an der Käfighaltung ist die nicht artgerechte Haltung. Zudem ist oder wird die Käfighaltung in mehr und mehr Ländern verboten. Nachteilig beim Verfahren F ist, dass die Zugabe von Bentonit in großen Mengen (Prozent-Bereich) erfolgen muss.

Der vorliegenden Erfindung liegt die Aufgabe zugrunde die Qualität der Fäkalien von Geflügel, die bei der Haltung, Aufzucht oder Mast des Geflügels am Entstehungsort anfallen, zu verbessern. Weiterhin soll die Feuchtigkeit im Kot vermindert werden, um Entzündungen und Krankheiten bei den Tieren zu reduzieren. Des Weiteren soll die Qualität von Fäkalien von Geflügel derart modifiziert werden, dass das Entsorgungsproblem, das mit der Entstehung der Fäkalien eng verknüpft ist, reduziert, und dass die Lagerstätten für die Fäkalien hinsichtlich Menge, Feuchtigkeit und Ammoniakemission entlastet und die negativen Umwelteinflüsse hinsichtlich Ammoniak-Emissionen bei der Tierhaltung vermindert werden.

Gelöst wird diese Aufgabe durch eine Verwendung gemäß Anspruch 1. Bevorzugte Ausführungsformen der Erfindung sind in den Unteransprüchen angegeben, die wahlweise miteinander kombiniert werden können.

Somit ist die Verwendung einer Zusammensetzung enthaltend Guanidinoessigsäure und Glycin zur Reduzierung der Feuchtigkeit in Faeces von Geflügel und/oder zur Reduzierung des Stickstoffgehaltes in Faeces von Geflügel, jeweils während der Aufzucht, während der Haltung oder in der Mast des Geflügels, Gegenstand der vorliegenden Erfindung.

Erfindungswesentlich wird in dieser Verwendung während der Aufzucht, während der Haltung oder in der Mast des Geflügels, eine Zusammensetzung enthaltend Guanidinoessigsäure und Glycin eingesetzt. Die Zusammensetzung kann dabei als Feststoffzubereitung in einem Futter oder gelöst in Wasser als Tränklösung eingesetzt werden. Das Futter oder die Tränklösung werden dabei dem Geflügel für die normale Ernährung bereitgestellt.

Guanidinoessigsäure (CAS-Nr. 352-97-6, Summenformel C₃H₇N₃O₂ - nachfolgend auch GAA genannt), auch als Glycocyamin, N-Amidinoglycin, N-(Aminoimino-methyl)-glycin bekannt, ist seit einiger Zeit auf dem Markt erhältlich und ist in der Geflügelmast als Futtermittelzusatz zugelassen. Vielfältige Studien haben unter anderem gezeigt, dass der Einsatz von Guanidinoessigsäure während der Aufzucht, während der Haltung oder in der Mast des Geflügels eine Futtermittelersparnis, eine Verbesserung der Futteraufnahme und/oder eine Steigerung der Mastleistung bewirkt.

Glycin (syn. Glycoll, Aminoessigsäure, Aminoethansäure; C₂H₅NO₂, CAS-Nr. 56-40-6) ist als Lebensmittelzusatzstoff E640 ohne Mengenbeschränkung in der EU zugelassen und ist ebenfalls seit geraumer Zeit als Futtermittelzusatz auf dem Markt erhältlich und in der Geflügelmast zugelassen. Studien für Hühner [Corzo A.; Kidd, M.T. (2004) Dietary Glycine needs of broiler chicks, Poult. Sci. 83(8), 1382-4)] haben gezeigt, dass Glycin ein limitierender Nährstoff ist, obwohl er im Tier auch selbst produziert wird. Es wurde bestimmt [Graber, G.; Baker, D.H. (1973) The essential nature of glycine and proline for growing chicks, Poult. Sci. 52, 892-896)], dass die Tiere nur 60 -70 % des für optimales Wachstum benötigten Bedarfes selbst produzieren.

Im Gegensatz zu Kreatin weisen Guanidinoessigsäure und deren Salze in saurer wässriger Lösung eine deutlich höhere Stabilität auf und werden erst unter physiologischen Bedingungen in Kreatin umgewandelt. Guanidinoessigsäure wird hierbei erst nach der Resorption, vor allem in der Leber, in Kreatin umgewandelt. Somit wird im Gegensatz zum Kreatin der überwiegende Teil der verabreichten bzw. gefütterten Guanidinoessigsäure nicht durch Instabilitätsreaktionen, z. B. im Magen, abgebaut und vor der Resorption ausgeschieden, sondern steht tatsächlich für die entsprechenden physiologischen Stoffwechselreaktionen zur Verfügung.

Überraschender Weise hat sich gezeigt, dass die Verabreichung einer Zusammensetzung enthaltend Guanidinoessigsäure und Glycin zu dem gewünschten Nutzen, nämlich der Reduzierung der Feuchtigkeit der Faeces als auch der Reduzierung des Gehaltes an Stickstoff-haltigen Verbindungen in den Faeces führt. Dies auch wenn sowohl das Wasser als auch die Futterzusammensetzung, die zur normalen Ernährung oder zur Mast notwendig sind, in einer Menge bereitgestellt werden, die den täglichen Bedarf des Geflügels übersteigt. Somit kann das Geflügel normal oder gesteigert wachsen, wobei gleichzeitig die Qualität der Faeces verbessert wird. Ohne an die Theorie gebunden zu sein liegt die Vermutung nahe, dass die Guanidinoessigsäure und das Glycin die Aktivität des Verdauungsorgans des Geflügels in positiver Art und Weise beeinflusst, so dass sowohl die Feuchtigkeit in den Faeces als auch der Gehalt an Stickstoff-haltigen Verbindungen in den Faeces gegenüber Faeces von Geflügel, die eine Futterzusammensetzung ohne Guanidinoessigsäure und Glycin erhalten haben, reduziert wird. Insbesondere kann somit auch die Einstreu verringert werden, wodurch weniger Lagervolumen für die Lagerung der Faeces benötigt wird und weniger Transportaufwand bei der Entsorgung notwendig wird.

Der Feuchtigkeitsgehalt, also der Wassergehalt in den Faeces wird bei der Supplementierung mit Guanidinoessigsäure und Glycin im Vergleich zur Fütterung mit dem gleichen Basisfutter ohne Zugabe von Guanidinoessigsäure und Glycin vorzugsweise um mindestens 3,5 %, mehr bevorzugt um mindestens 4 %, noch mehr bevorzugt um mindestens 5 %, besonders bevorzugt um mindestens 6 %, weiterhin bevorzugt um mindestens 8 % und am meisten bevorzugt um mindestens 10% reduziert.

Zudem konnte vollkommen überraschend festgestellt werden, dass der Stickstoffgehalt in den Faeces bei der Supplementierung mit Guanidinoessigsäure und Glycin reduziert wird, obwohl die Tiere so viel Wasser und Nahrung aufnehmen, wie ihr Instinkt es zulässt und ihr Verdauungstrakt verarbeiten kann.

Der Stickstoffgehalt in den Faeces wird bei der erfindungsgemäßen Supplementierung mit Guanidinoessigsäure und Glycin im Vergleich zur Fütterung mit dem gleichen Basisfutter ohne Zugabe von Guanidinoessigsäure und Glycin vorzugsweise um mindestens 5 %, mehr bevorzugt um mindestens 6 % und noch mehr bevorzugt um mindestens 7 %, reduziert.

Bevorzugt kann eine Zusammensetzung eingesetzt werden, die Guanidinoessigsäure und Glycin enthält, wobei das Gewichtsverhältnis Guanidinoessigsäure zu Glycin im Bereich von 1 : 1 bis 100 : 1, bevorzugt 1 : 1 bis 10 : 1, weiter bevorzugt 1,5 : 1 bis 10 : 1, weiter bevorzugt 2 : 1 bis 8 : 1 und bevorzugt 2 : 1 bis 6 : 1 liegt.

Gemäß einer bevorzugten Ausführung der Erfindung kann vorgesehen sein, dass die Verwendung derart erfolgt, dass die Zusammensetzung als Feststoffzubereitung in einem Futter für das Geflügel bereitgestellt wird. Weiter bevorzugt wird die Zusammensetzung als Feststoffzubereitung in einem Futter für das Geflügel bereitgestellt, wobei das Futter ein Basisfutter, die Guanidinoessigsäure in einer Menge von 0,1 bis 5 g pro 1 kg Basisfutter und das Glycin in einer Menge von 0,01 bis 2,5 g pro 1 kg Basisfutter enthält.

Hierbei kann das Futter weiter bevorzugt die Guanidinoessigsäure in einer Menge von mindestens 0,2 g, bevorzugt mindestens 0,3 g, weiter bevorzugt von mindestens 0,4 g pro 1 kg Basisfutter enthalten. Weiterhin bevorzugt kann das Futter die Guanidinoessigsäure in einer Menge von höchstens 5 g, weiter bevorzugt höchstens 4 g, weiter bevorzugt höchstens 3 g und besonders bevorzugt von höchstens 2,5 g, pro 1 kg Basisfutter enthalten.

In einer weiteren bevorzugten Ausführungsform enthält das Futter die Guanidinoessigsäure vorzugsweise in einer Menge von 0,01 g bis 1 g, noch mehr bevorzugt in einer Menge von 0,1 g bis 1 g pro 1 kg Basisfutter.

Hierbei kann das Futter weiter bevorzugt das Glycin in einer Menge von mindestens 0,02 g, bevorzugt mindestens 0,03 g weiter bevorzugt von mindestens 0,04 g pro 1 kg Basisfutter enthalten. Weiterhin bevorzugt kann das Futter das Glycin in einer Menge von höchstens 2,5 g, weiter bevorzugt höchstens 2 g, weiter bevorzugt höchstens 1 g und besonders bevorzugt von höchstens 0,6 g, pro 1 kg Basisfutter enthalten.

Somit ist eine Verwendung besonders bevorzugt, in der die Zusammensetzung als Feststoffzubereitung in einem Futter für das Geflügel bereitgestellt wird, wobei das Futter ein Basisfutter, die Guanidinoessigsäure in einer Menge von 0,1 bis 5 g pro 1 kg Basisfutter und das Glycin in einer Menge von 0,01 bis 2,5 g pro 1 kg Basisfutter enthält.

Besonders bevorzugt ist eine Verwendung einer Zusammensetzung, die aus der Guanidinoessigsäure und dem Glycin besteht.

Gemäß einem weiterführenden Gedanken kann die Zusammensetzung auch als wässrige Lösung in Form einer Tränklösung für das Geflügel bereitgestellt werden. Somit ist auch eine Verwendung einer Zusammensetzung enthaltend Guanidinoessigsäure und Glycin zur Reduzierung der Feuchtigkeit in Faeces von Geflügel und/oder zur Reduzierung des Stickstoffgehaltes in Faeces von Geflügel während der Aufzucht, während der Haltung oder während der Mast des Geflügels Gegenstand der vorliegenden Erfindung, wobei die Zusammensetzung als Tränklösung für das Geflügel bereit gestellt wird und wobei die Tränklösung bevorzugt Wasser, die Guanidinoessigsäure in einer Menge von 0,05 bis 1,2 g, insbesondere 0,4 bis 1,2 g, oder weiter bevorzugt von 0,1 bis 0,3 g pro 1 l Wasser, und das Glycin in einer Menge von 0,005 g bis 0,12 g, insbesondere 0,04 bis 0,12 g, pro 1 l Wasser enthält.

Die Konzentration der wässrigen Lösung kann in Abhängigkeit von der Größe, des Alters und/oder des Gewichtes des Geflügels variiert werden. Bevorzugt weist die Lösung eine Konzentration von Guanidinoessigsäure in Wasser von mindestens 0,05 g/ l, weiter bevorzugt von mindestens 0,1 g/ l auf, und gleichzeitig oder unabhängig hiervon weiter bevorzugt von höchstens 1,2 g/ l, weiter bevorzugt höchstens 1 g/ l, weiterbevorzugt von höchstens 0,8 g/ l, weiter bevorzugt von höchstens 0,6 g/ l, besonders bevorzugt von höchstens 0,5 g/ l, besonders bevorzugt von höchstens 0,4 g/ l und ganz besonders bevorzugt von höchstens 0,3 g/ l auf.

Weiter bevorzugt weist die Lösung eine Konzentration von Glycin in Wasser von mindestens 0,005 g/ l, weiter bevorzugt von mindestens 0,01 g pro 1 l Wasser auf, und gleichzeitig oder unabhängig hiervon weiter bevorzugt von höchstens 0,12 g pro 1 l Wasser, weiter bevorzugt höchstens 0,1 g pro 1 l Wasser, besonders bevorzugt von höchstens 0,05 g pro 1 l Wasser auf.

Bevorzugt weist die Lösung eine Konzentration von Guanidinoessigsäure in Wasser von 0,1 bis 0,8 g/ l, besonders bevorzugt von 0,1 bis 0,5 g/ l und ganz besonders bevorzugt von 0,1 bis 0,3 g/ l auf, und eine Konzentration von Glycin in Wasser von 0,01 bis 0,08 g/ l, besonders bevorzugt von 0,01 bis 0,05 g/ l, und ganz besonders bevorzugt von 0,01 bis 0,03 g/ l auf.

Ganz besonders bevorzugt wird hierbei das Futter oder die Tränklösung dem Geflügel *ad libitum* für die Ernährung des Geflügels bereitgestellt.

Im Zusammenhang mit der vorliegenden Erfindung soll unter dem Begriff *ad libitum* eine Menge an Futter und eine Menge an Tränklösung verstanden sein, die den täglichen Bedarf an Futter und an Tränklösung für die Ernährung jedes einzelnen Individuums, das betrachtet wird, oder bezogen auf die Gesamtheit an Individuen, die betrachtet werden, den täglichen Bedarf für die Ernährung der Gesamtheit der Individuen übersteigt. Somit soll gemäß der vorliegenden Erfindung das Futter oder die Tränklösung vorzugsweise *"ad libitum",* nämlich im Überschuss zur freien Verwendung des Geflügels bereitgestellt werden.

Somit unterscheidet sich die bevorzugte Verwendung *ad libitum* deutlich von einer spezifischen Verabreichung eines Wirkstoffes, der beispielsweise täglich in Form einer definierten Menge von 500 mg pro Tag in Einzeldosen und unabhängig von weiteren Nahrungs- oder Lebensmitteln verabreicht wird. Umso überraschender ist es, dass die alleinige Bereitstellung von einem Futter *ad libitum,* nämlich zur freien Verfügung des Geflügels, enthaltend ein Basisfutter, Guanidinoessigsäure in einer Menge von 0,1 bis 5 g pro 1 kg Futter und Glycin in einer Menge von 0,01 bis 2,5 g pro 1 kg Futter oder einer Tränklösung *ad libitum,* nämlich zur freien Verfügung des Geflügels, enthaltend Wasser, Guanidinoessigsäure in einer Menge von 0,05 bis 1,2 g pro 1 l Wasser und Glycin in einer Menge von 0,005 bis 0,12 g Glycin pro 1 l Wasser zu dem erwünschten Erfolg, nämlich zur Reduzierung der Feuchtigkeit in Faeces von Geflügel und/oder zur Reduzierung des Stickstoffgehaltes in Faeces von Geflügel, führt.

Es hat sich gezeigt, dass die erfindungsgemäße Verwendung der Guanidinoessigsäure in Kombination mit Glycin nicht auf die Substanzen als solche beschränkt ist. Vielmehr hat sich gezeigt, dass in der Verwendung sowohl Guanidinoessigsäure als solche, nämlich als freie Säure, oder auch als Salz der Guanidinoessigsäure eingesetzt werden kann.

Somit ist auch eine bevorzugte Verwendung der vorliegenden Erfindung umfasst, in der die Zusammensetzung
i) die Guanidinoessigsäure als freie Säure oder in Form eines Salzes dieser Säure und/oder
ii) das Glycin als freie Säure oder in Form eines Salzes dieser Säure, enthält.

Besonders bevorzugt kann dabei als Salz ein Salz ausgewählt aus der Gruppe der Alkali- oder Erdalkalisalze der Guanidinoessigsäure eingesetzt werden. Ganz besonders bevorzugt können hierbei Natrium-Guanidinoacetat, Kalium-Guanidinoacetat, Magnesium-Guanidinoacetat oder Calcium-Guanidinoacetat, eingesetzt werden.

Weiterhin hat sich gezeigt, dass in der Verwendung sowohl Gycin als solche, nämlich als freie Säure, oder auch in Form eines Salzes des Glycin eingesetzt werden kann. Besonders bevorzugt kann dabei als Salz ein Salz ausgewählt aus der Gruppe der Alkali- oder Erdalkalisalze des Glycins, insbesondere Natrium-Glycinat, Kalium-Glycinat, Magnesium-Glycinat oder Calcium-Glycinat eingesetzt werden.

Die hierin beschriebene Erfindung kann bei einer Vielzahl an verschiedenen Geflügelarten Anwendung finden. Besonders bevorzugt kann die Zusammensetzung enthaltend Guanidinoessigsäure und Glycin bei Geflügel ausgewählt aus der Gruppe Enten, Gänse, Hühner, Hähnchen, Legehennen, Broiler, Truthähne, Wachteln, Strauße und Puten eingesetzt werden.

Weiterhin hat sich mit den der Erfindung zugrundeliegenden Untersuchungen gezeigt, dass das eingesetzte Basisfutter einen definierten Brennwert haben sollte. Einerseits sollte das Basisfutter einen für die normale Ernährung und gesundes Wachstum festgelegten Brennwert nicht unterschreiten und andererseits auch nicht überschreiten, um eine Fettleibigkeit zu vermeiden. So haben sich gute Ergebnisse gezeigt, wenn das Basisfutter für das Geflügel einen Brennwert von 8 MJ bis 20 MJ pro 1 kg Basisfutter, insbesondere von 10 MJ bis 15 MJ pro 1 kg Basisfutter aufweist und/ oder das Basisfutter ein bilanziertes Basisfutter gemäß Animal Nutrition Handbook, 3rd Revision, 2014 Section 12, Poultry Nutrition and Feeding ist.

Dabei kann sowohl das Verfahren als auch die Verwendung besonders bevorzugt ausgeführt werden, wenn das Basisfutter mindestens ein Getreide, ein Getreidemehl, ein Getreideschrot oder Extrakte hieraus, umfasst. Weiterhin bevorzugt ist hierbei ein Verfahren oder eine Verwendung in dem mindestens ein Getreide, ein Getreidemehl, ein Getreideschrot oder Extrakte hieraus, ausgewählt wird aus der Gruppe:
a. Mais, Maismehl, Maisschrot oder ein Extrakt hieraus,
b. Hirse, Hirsemehl, Hirseschrot oder ein Extrakt hieraus,
c. Soja, Sojamehl, Sojaschrot oder ein Extrakt hieraus,
d. Weizen, Weizenmehl, Weizenschrot oder ein Extrakt hieraus und/oder
e. Gerste, Gerstenmehl, Gerstenschrot oder ein Extrakt hieraus.

Weiterhin kann die Verwendung besonders bevorzugt ausgeführt werden, wenn das Basisfutter mindestens einen weiteren Futtermittelzusatz, insbesondere einen weiteren Futtermittelzusatz aus der Gruppe der Mineralstoffe Aminosäure und Vitamine, umfasst. Ganz besonders bevorzugt kann dieser Futtermittelzusatz ausgewählt werden aus der Gruppe Calciumcarbonat, Mono- oder Dicalciumphosphat, Lysin, Methionin, Threonin, Thryptophan, Valin, Arginin und Vitamine sowie Mischungen davon.

In einer besonders bevorzugten Ausführungsform wird ein Basisfutter verwendet, welches selbst keinen Gehalt an Guanidinoessigsäure und keinen Gehalt an Glycin aufweist.

Ein bevorzugtes Basisfutter, wie beispielsweise in der Tabelle 1a dieser Anmeldung angegeben, umfasst
150 ‰ - 200 ‰, insbesondere 188 ‰ Weizen,
300 ‰ - 400 ‰, insbesondere 350 ‰ Mais,
150 ‰ -200 ‰, insbesondere 165 ‰ Sojamehl,
50 ‰ bis 70 ‰, insbesondere 60 ‰ Sonnenblumenmehl,
70 ‰ bis 90 ‰, insbesondere 80 ‰ Weizenmischungen,
10 ‰ bis 30 ‰, insbesondere 20 ‰ tierisches Fett,
20 ‰ bis 30 ‰, insbesondere 24 ‰ Sojaöl,
25 ‰ bis 40 ‰, insbesondere 32 ‰ Kalk,
60 ‰ bis 70 ‰, insbesondere 64 ‰ Grit,
4 ‰ bis 8 ‰, insbesondere 6 ‰ Monokalziumphosphat,
2 ‰ bis 3 ‰, insbesondere 2,5 ‰ Salz (NaCl),
1 ‰ bis 2 ‰, insbesondere 1,6 ‰ Natriumhydrogenkarbonat,
0,4 ‰ bis 0,8 ‰, insbesondere 0,6 ‰ L-Lysin HCl,
1 ‰ bis 1,5 ‰, insbesondere 1,2 ‰ DL-Methionin, sowie
0,02 ‰ bis 0,05 ‰, insbesondere 0,035 ‰ Cholin.

Weiterhin kann die Verwendung besonders bevorzugt ausgeführt werden, wenn als Wasser Trinkwasser, Quellwasser, Brunnenwasser oder Leitungswasser verwendet wird

Weiterhin kann die Supplementierung mit der Zusammensetzung enthaltend Guanidinoessigsäure und Glycin dauerhaft über das Leben des Tieres oder in ausgewählten Phasen erfolgen.

Die vorliegende Erfindung betrifft weiterhin ein Verfahren zur Reduzierung der Feuchtigkeit in Faeces von Geflügel und/oder zur Reduzierung des Stickstoffgehaltes in Faeces von Geflügel, worin eine Zusammensetzung enthaltend Guanidinoessigsäure und Glycin dem Geflügel während der Aufzucht, während der Haltung oder in der Mast des Geflügels bereitgestellt wird zur Aufnahme *ad libitum* für das Geflügel.

Die bevorzugten Ausgestaltungen für das erfindungsgemäße Verfahren sind bei den erfindungsgemäßen Verwendungen beschrieben.

Die vorliegende Erfindung betrifft weiterhin eine Zusammensetzung enthaltend Guanidinoessigsäure und Glycin zur Reduzierung der Feuchtigkeit in Faeces von Geflügel und/oder zur Reduzierung des Stickstoffgehaltes in Faeces von Geflügel, jeweils während der Aufzucht, während der Haltung oder in der Mast des Geflügels.

Insbesondere betrifft die Erfindung eine Zusammensetzung bestehend aus Guanidinoessigsäure und Glycin zur Reduzierung der Feuchtigkeit in Faeces von Geflügel und/oder zur Reduzierung des Stickstoffgehaltes in Faeces von Geflügel, jeweils während der Aufzucht, während der Haltung oder in der Mast des Geflügels. Die bevorzugten Ausgestaltungen für die erfindungsgemäße Zusammensetzung sind bei den erfindungsgemäßen Verwendungen beschrieben.

Die nachfolgenden Beispiele sollen die vorliegende Erfindung veranschaulichen. Beispiele

Verwendete Futterzusammensetzung für Versuch 1:

**Tabelle 1a: Inhaltsstoffe der Futterzusammensetzung**

| **Zusammensetzung** | **‰** |
|---|---|
| Weizen | 188,04 |
| Mais | 350,00 |
| Sojamehl | 165,00 |
| Sonnenblumenmehl | 60,00 |
| Weizenmischungen | 80,00 |
| Tierisches Fett (Schmalz) | 20,00 |
| Sojaöl | 24,00 |
| Vormischung | 5,0 |
| Kalk (fein) | 32,00 |
| Grit | 64,00 |
| Monokalziumphosphat | 6,00 |
| Salz | 2,50 |
| NaHCO3 | 1,60 |
| L-Lysin HCl | 0,60 |
| DL-Methionin | 1,20 |
| Natuphos 5000G | 0,06 |
| Cholin | 0,035 |

**Tabelle 1b: Nährstoffe der Futterzusammensetzung**

| **Nährstoffe** | **Deklarierte Angabe [g/kg]** |
|---|---|
| Trockenmasse | 890 |
| Rohprotein | 161,2 |
| Rohfette | 66,8 |
| Rohfaser | 38,7 |
| Rohasche | 129,7 |
| Lysin | 7,80 |
| Methionin | 3,81 |
| Kalzium | 38,1 |
| Phosphor | 5,2 |
| Natrium | 1,5 |
| Energie (MJ/kg) | 11,79 |

### Versuch 1:

192 Legehennen (Lohmann LSL-Classic, Alter: 38 Wochen) wurden nach dem Zufallsprinzip in 4 Gruppen a 48 Stück aufgeteilt und in Maschenkäfigen (30 x 45 cm²) über einen Zeitraum von 4 Wochen gehalten. Jede Henne hatte unbeschränkt Zugang zu zwei Nippeltränken, die täglich mit Leitungswasser aufgefüllt wurden (ad *libitum*)*.* Die Futterstelle wurde ebenfalls täglich aufgefüllt (*ad libitum*). Die Minimaltemperatur betrug 20 °C und der Raum wurde 14 Stunden beleuchtet und 10 Stunden verdunkelt. Die Exkremente jeder einzelnen Henne wurden in einer Kotbox aufgefangen. Der Kotbox wurde wöchentlich gelehrt und gruppenweise getrennt gesammelt. Der gesammelte Kot jeder Gruppe wurde vereinigt, mechanisch homogenisiert und durch Trocknung bei 130 °C im Vakuum der Feststoffgehalt ermittelt. Der Stickstoffgehalt der getrockneten Probe wurde mit der Kjeldahl-Methode ermittelt.

Gruppe 1 wurde mit dem o. g. Futter (Tabelle 1a, 1b) ernährt. Für die Gruppe 2 wurden dem Futter zu 1000 kg von dem oben genannten Futter 600 g Guanidinoessigsäure zugegeben.

Für die Gruppe 3 wurden dem Futter zu 1000 kg von dem oben genannten Futter 10 g Glycin zugegeben. Für die Gruppe 4 wurden dem Futter zu 1000 kg von dem oben genannten Futter 600 g Guanidinoessigsäure und 10 g Glycin zugegeben.

**Tabelle 2: Gesamtmenge Faeces**

| | Gewicht Faeces [kg] | | | |
|---|---|---|---|---|
| | Woche 1 | Woche 2 | Woche 3 | Woche 4 |
| Gruppe 1 | 12,4 | 13,5 | 12,7 | 12,8 |
| Gruppe 2 | 12,3 | 12,8 | 12,3 | 12,9 |
| Gruppe 3 | 12,7 | 13,0 | 12,8 | 13,3 |
| Gruppe 4 | 11,9 | 12,5 | 12,0 | 12,2 |

**Tabelle 3: Feststoffgehalt der Faeces gemäß Tabelle 2**

| | Feststoffgehalt Faeces [%] | | | |
|---|---|---|---|---|
| | Woche 1 | Woche 2 | Woche 3 | Woche 4 |
| Gruppe 1 | 45,2 | 47,6 | 46,1 | 48,7 |
| Gruppe 2 | 48,3 | 51,8 | 51,4 | 50,1 |
| Gruppe 3 | 45,5 | 48,0 | 48,9 | 48,4 |
| Gruppe 4 | 49,8 | 53,1 | 52,5 | 53,9 |

Mit der Umrechnung (100- Feststoffgehalt) % = Wassergehalt % ergibt sich ein Wassergehalt gemäß Tabelle 4.

**Tabelle 4: Wassergehalt der Faeces gemäß Tabelle 2 und Tabelle 3**

| | Wassergehalt Faeces [%] | | | |
|---|---|---|---|---|
| | Woche 1 | Woche 2 | Woche 3 | Woche 4 |
| Gruppe 1 | 54,8 | 52,4 | 53,9 | 51,3 |
| Gruppe 2 | 51,7 | 48,2 | 48,6 | 49,9 |
| Gruppe 3 | 54,5 | 52,0 | 51,1 | 51,6 |
| Gruppe 4 | 50,2 | 46,9 | 47,5 | 46,1 |

Hieraus wurde zunächst durch Subtraktion die absolute prozentuale Veränderung des Wassergehaltes relativ zur Gruppe 1 (Δ_{abs}) berechnet sowie die relative prozentuale Veränderung des Wassergehaltes relativ zur Gruppe 1 (Δᵣₑₗ). Die Ergebnisse sind in Tabelle 5 dargestellt.

**Tabelle 5: Absolute und relative Veränderung des Wassergehaltes der Faeces gemäß Tabelle 4**

| | Woche 1 | Woche 2 | Woche 3 | Woche 4 |
|---|---|---|---|---|
| Δ_{abs} (Gruppe 1 - Gruppe 2) [%] | 3,1 | 4,2 | 5,3 | 1,4 |
| Δ_{abs} (Gruppe 1 - Gruppe 3) [%] | 0,3 | 0,4 | 2,8 | -0,3 |
| Δ_{abs} (Gruppe 1 - Gruppe 4) [%] | 4,6 | 5,5 | 6,4 | 5,2 |
| Δᵣₑₗ (Gruppe 1 - Gruppe 2) [%] | 5,6 | 8,0 | 9,8 | 2,7 |
| Δᵣₑₗ (Gruppe 1 - Gruppe 3) [%] | 0,5 | 0,7 | 5,2 | -0,6 |
| Δᵣₑₗ (Gruppe 1 - Gruppe 4) [%] | 8,4 | 10,5 | 11,9 | 10,1 |

Bei der mit Guanidinoessigsäure und Glycin supplementierten Gruppe 4 zeigt sich ein erhöhter Feststoffgehalt in den Faeces im Vergleich zur Gruppe 1. Der Wassergehalt der Faeces verringerte zwischen 8,4 % und 11,9 %. Bei den allein mit Guanidinoessigsäure supplementierten Gruppe (Gruppe 2) zeigte sich nur ein schwächerer und bei der allein mit Glycin (Gruppe 3) supplementierten Gruppe zeigte sich beim Wassergehalt nahezu kein Effekt.

Der Stickstoffgehalt der getrockneten Probe wurde mit der Kjeldahl-Methode ermittelt und ist in Tabelle 6 dargestellt.

**Tabelle 6: Stickstoffgehalt der Faeces gemäß Tabelle 2 und Tabelle 3**

| | Stickstoff (N) in getrockneten Faeces [kg/to] | | | |
|---|---|---|---|---|
| | Woche 1 | Woche 2 | Woche 3 | Woche 4 |
| Gruppe 1 | 52,3 | 55,2 | 51,9 | 52,4 |
| Gruppe 2 | 50,4 | 52,8 | 51,7 | 50,1 |
| Gruppe 3 | 50,9 | 53,2 | 53,7 | 52,0 |
| Gruppe 4 | 49,0 | 50,4 | 47,8 | 48,2 |

Aus den Werten in Tabelle 6 wurde zunächst durch Subtraktion die absolute Veränderung des Stickstoffgehaltes relativ zur Gruppe 1 (ΔN_{abs}) berechnet und daraus die relative prozentuale Veränderung des Stickstoffgehaltes relativ zur Gruppe 1 (ΔNᵣₑₗ). Die Ergebnisse sind in Tabelle 7 dargestellt.

**Tabelle 7: Absolute und relative Veränderung des Stickstoffgehaltes der Faeces gemäß Tabelle 6**

| | Woche 1 | Woche 2 | Woche 3 | Woche 4 |
|---|---|---|---|---|
| ΔN_{abs} (Gruppe 1 - Gruppe 2) [kg/to] | 1,9 | 2,4 | 0,2 | 2,1 |
| ΔN_{abs} (Gruppe 1 - Gruppe 3) [kg/to] | 1,4 | 2,0 | -1,8 | 0,4 |
| ΔN_{abs} (Gruppe 1 - Gruppe 4) [kg/to] | 3,3 | 4,8 | 4,1 | 4,2 |
| ΔNᵣₑₗ (Gruppe 1 - Gruppe 2) [%] | 3,6 | 4,3 | 0,3 | 4,0 |
| ΔNᵣₑₗ (Gruppe 1 - Gruppe 2) [%] | 2,7 | 3,6 | -3,5 | 0,8 |
| ΔNᵣₑₗ (Gruppe 1 - Gruppe 4) [%] | 6,3 | 8,7 | 7,9 | 8,0 |

Es zeigte sich bei der mit Guanidinoessigsäure und Glycin supplementierten Gruppe 4 ein niedrigerer Stickstoffgehalt in den Faeces im Vergleich zur Gruppe 1. Der Stickstoff-Gehalt in den Faeces lag um 6,3 % bis 8,7 % niedriger als bei der Vergleichsgruppe. Bei den allein mit Guanidinoessigsäure (Gruppe 2) und allein mit Glycin (Gruppe 3) supplementierten Gruppen zeigte sich beim Stickstoffgehalt nur ein geringfügiger Effekt.

### Versuch 2:

2505 Masthähnchen (Cobb 400) wurden in einer Dichte von 94,5 square inch/Tier auf Sägespänen eingestallt. Wasser und Futter standen *ad libitum* zur Verfügung. In den ersten 15 Tagen wurde mit Infrarotlampen beheizt. Alle Tiere wurden 18 Tage mit einer Geflügelstarterdiät (Basis Weizen, Sojaextraktionsschrot, Mais, Sojabohnentoast, Maiskeime) ernährt: Gallugold^{®} Geflügelstarter OG (12,2 MJ/kg, 22,00 % Rohprotein, 0,62 % Methionin, 6,00 % Rohfett, 3,80 % Rohfaser, 6,80 % Rohasche, 0,95 % Calcium, 0,65 % Phosphor, 0,16 % Natrium; Zusatzstoffe pro kg Vitamin A 10.000 I.E., Vitamin D3 5.000 IE, Vitamin E 100 mg, Kupfer 10 mg, Selen 0,45 mg) ernährt. Ab dem 18. Tag wurden nach dem Zufallsprinzip 4 Gruppen a 46 Stück gebildet. Gruppe 1 wurde mit Gallugold^{®} Geflügelkorn OG (Basis Mais, Sojabohnen, Weizen, Sojabohnentoast, Pflanzenöl, Maiskeime) ernährt (12,6 MJ/kg, 22,00 % Rohprotein, 0,56 % Methionin, 6,8 % Rohfett, 3,5 % Rohfaser, 9,0 % Rohasche, 0,90 % Calcium, 0,65 % Phosphor, 0,15 % Natrium; Zusatzstoffe pro kg Vitamin A 13.000 I.E., Vitamin D3 5.000 IE, Vitamin E 100 mg, Kupfer 10 mg, Selen 0,42 mg).

Gruppe 2 wurde wie Gruppe 1 ernährt jedoch wurden dem Futter zuvor 0,06 Gew.-% Guanidinoessigsäure zugesetzt und mechanisch 10 min in einer Trommel vermischt. Gruppe 3 wurde wie Gruppe 1 ernährt jedoch wurden dem Futter zuvor 0,002 Gew.-% Glycin zugesetzt und mechanisch 10 min in einer Trommel vermischt.

Gruppe 4 wurde wie Gruppe 1 ernährt jedoch wurden dem Futter zuvor 0,06 Gew.-% Guanidinoessigsäure und 0,002 Gew.-% Glycin zugesetzt und mechanisch 10 min in einer Trommel vermischt.

Am 21., 25. und am 30. Tag wurden jede Gruppe für jeweils 24 Stunden auf einen leeren Stall mit Betonboden ohne Einstreu umgesiedelt. Nach 24 h wurden die Gruppen zurück umgesiedelt und mittels einer Putzerkelle die Faeces jeder Gruppe gesammelt und durch Trocknung bei 130 °C im Vakuum der Feststoffgehalt ermittelt. Die Werte sind in Tabellen 8 und 9 dargestellt.

**Tabelle 8: Gesamtmenge Faeces**

| | Gewicht Faeces [kg] | | |
|---|---|---|---|
| | Tag 21 | Tag 25 | Tag 30 |
| Gruppe 1 | 0,63 | 0,71 | 0,83 |
| Gruppe 2 | 0,60 | 0,69 | 0,81 |
| Gruppe 3 | 0,64 | 0,73 | 0,80 |
| Gruppe 4 | 0,61 | 0,67 | 0,79 |

**Tabelle 9: Feststoffgehalt der Faeces gemäß Tabelle 8**

| | Feststoffgehalt Faeces [%] | | |
|---|---|---|---|
| | Tag 21 | Tag 25 | Tag 30 |
| Gruppe 1 | 29,8 | 31,0 | 30,3 |
| Gruppe 2 | 29,6 | 33,4 | 31,3 |
| Gruppe 3 | 30,2 | 30,5 | 31,1 |
| Gruppe 4 | 32,4 | 33,9 | 32,8 |

Mit der Umrechnung (100- Feststoffgehalt) % = Wassergehalt % ergibt sich ein Wassergehalt gemäß Tabelle 10.

**Tabelle 10: Wassergehalt der Faeces gemäß Tabelle 8 und Tabelle 9**

| | Wassergehalt Faeces [%] | | |
|---|---|---|---|
| | Tag 21 | Tag 25 | Tag 30 |
| Gruppe 1 | 70,2 | 69,0 | 69,7 |
| Gruppe 2 | 70,4 | 66,6 | 68,7 |
| Gruppe 3 | 69,8 | 69,5 | 68,9 |
| Gruppe 4 | 67,6 | 66,1 | 67,2 |

Hieraus wurde zunächst durch Subtraktion die absolute prozentuale Veränderung des Wassergehaltes relativ zur Gruppe 1 (Δ_{abs}) berechnet sowie die relative prozentuale Veränderung des Wassergehaltes relativ zur Gruppe 1 (Δᵣₑₗ). Die Ergebnisse sind in Tabelle 11 dargestellt.

**Tabelle 11: Absolute und relative Veränderung des Wassergehaltes der Faeces gemäß Tabelle 10**

| | Tag 21 | Tag 25 | Tag 30 |
|---|---|---|---|
| Δ_{abs} (Gruppe 1 - Gruppe 2) [%] | -0,2 | 2,4 | 1,0 |
| Δ_{abs} (Gruppe 1 - Gruppe 3) [%] | 0,4 | -0,5 | 0,8 |
| Δ_{abs} (Gruppe 1 - Gruppe 4) [%] | 2,6 | 2,9 | 2,5 |
| Δᵣₑₗ (Gruppe 1 - Gruppe 2) [%] | -0,3 | 3,5 | 1,4 |
| Δᵣₑₗ (Gruppe 1 - Gruppe 3) [%] | 0,6 | -0,7 | 1,1 |
| Δᵣₑₗ (Gruppe 1 - Gruppe 4) [%] | 3,7 | 4,2 | 3,6 |

Bei der mit Guanidinoessigsäure und Glycin supplementierten Gruppe 4 zeigt sich ein erhöhter Feststoffgehalt in den Faeces im Vergleich zur Gruppe 1. Der Wassergehalt der Faeces verringerte zwischen 3,6 % und 4,2 %. Hier zeigte sich bei Gruppe 2 ein geringer Effekt. Bei Gruppe 3 war nahezu kein Effekt sichtbar

Der Stickstoffgehalt der getrockneten Probe wurde mit der Kjeldahl-Methode ermittelt.

**Tabelle 12: Stickstoffgehalt der Faeces gemäß Tabelle 8 und Tabelle 9**

| | Stickstoff (N) in getrockneten Faeces [kg/to] | | |
|---|---|---|---|
| | Tag 21 | Tag 25 | Tag 30 |
| Gruppe 1 | 58,1 | 59,5 | 58,7 |
| Gruppe 2 | 56,9 | 57,7 | 55,4 |
| Gruppe 3 | 58,3 | 56,7 | 59,2 |
| Gruppe 4 | 54,4 | 55,2 | 54,1 |

**Tabelle 13: Absolute und relative Veränderung des Stickstoffgehaltes der Faeces gemäß Tabelle 12**

| | Tag 21 | Tag 25 | Tag 30 |
|---|---|---|---|
| ΔN_{abs} (Gruppe 1 - Gruppe 2) [kg/to] | 1,2 | 1,8 | 3,3 |
| ΔN_{abs} (Gruppe 1 - Gruppe 3) [kg/to] | -0,2 | 2,8 | -0,5 |
| ΔN_{abs} (Gruppe 1 - Gruppe 4) [kg/to] | 3,7 | 4,3 | 4,6 |
| ΔNᵣₑₗ (Gruppe 1 - Gruppe 2) [%] | 2,1 | 3,3 | 5,6 |
| ΔNᵣₑₗ (Gruppe 1 - Gruppe 3) [%] | -0,3 | 4,7 | -0,9 |
| ΔNᵣₑₗ (Gruppe 1 - Gruppe 4) [%] | 6,4 | 7,2 | 7,8 |

Weiterhin zeigte sich bei der mit Guanidinoessigsäure und Glycin supplementierten Gruppe 4 ein niedrigerer Stickstoffgehalt in den Faeces im Vergleich zur Gruppe 1. Der Stickstoff-Gehalt in den Faeces lag um 6,4 % bis 7,8 % niedriger als bei der Vergleichsgruppe. Bei Gruppe 2 war auch ein Effekt hinsichtlich geringerem N-Gehalt erkennbar, der jedoch deutlich geringer war als bei Gruppe 4. Bei Gruppe 2 wurde an Tag 21 und an Tag 30 ein leicht höherer N-Gehalt (0,3 % resp. 0,9 %) gefunden als bei der Kontrollgruppe.

## Patentansprüche

1. Verwendung einer Zusammensetzung enthaltend Guanidinoessigsäure und Glycin zur Reduzierung der Feuchtigkeit in Faeces von Geflügel und/oder zur Reduzierung des Stickstoffgehaltes in Faeces von Geflügel, jeweils während der Aufzucht, während der Haltung oder in der Mast des Geflügels.

2. Verwendung nach Anspruch 1, **dadurch gekennzeichnet, dass** die Zusammensetzung als Feststoffzubereitung in einem Futter für das Geflügel bereitgestellt wird und das Futter ein Basisfutter, die Guanidinoessigsäure in einer Menge von 0,1 bis 5 g pro 1 kg Basisfutter und das Glycin in einer Menge von 0,01 bis 2,5 g pro 1 kg Basisfutter enthält.

3. Verwendung nach Anspruch 1, **dadurch gekennzeichnet, dass** die Zusammensetzung als Tränklösung für das Geflügel bereitgestellt wird und die Tränklösung Wasser, die Guanidinoessigsäure in einer Menge von 0,05 bis 1,2 g pro 1 l Wasser und das Glycin in einer Menge von 0,005 g bis 0,12 g pro 1 l Wasser enthält.

4. Verwendung nach einem der vorgenannten Ansprüche 2 oder 3, **dadurch gekennzeichnet, dass** das Futter oder die Tränklösung dem Geflügel *ad libitum* für die Ernährung des Geflügels bereitgestellt wird.

5. Verwendung nach Anspruch 1, **dadurch gekennzeichnet, dass** die Zusammensetzung
i) die Guanidinoessigsäure als freie Säure oder in Form eines Salzes dieser Säure und/oder
ii) das Glycin als freie Säure oder in Form eines Salzes dieser Säure, enthält.

6. Verwendung nach einem der vorgenannten Ansprüche, **dadurch gekennzeichnet, dass** die Guanidinoessigsäure in Form eines Salzes der Guanidinoessigsäure verwendet wird, wobei das Salz ausgewählt wird aus der Gruppe der Alkali- oder Erdalkalisalze der Guanidinoessigsäure, insbesondere Natrium-Guanidinoacetat, Kalium-Guanidinoacetat, Magnesium-Guanidinoacetat oder Calcium-Guanidinoacetat.

7. Verwendung nach mindestens einem der vorgenannten Ansprüche, **dadurch gekennzeichnet, dass** das Glycin in Form eines Salzes des Glycin verwendet wird, wobei das Salz ausgewählt wird aus der Gruppe der Alkali- oder Erdalkalisalze des Glycins, insbesondere Natrium-Glycinat, Kalium-Glycinat, Magnesium-Glycinat oder Calcium-Glycinat.

8. Verwendung nach mindestens einem der vorhergehenden Ansprüche, **dadurch gekennzeichnet, dass** das Geflügel ausgewählt wird aus der Gruppe Enten, Gänse, Hühner, Hähnchen, Legehennen, Broiler, Truthähne, Wachteln, Sträuße und Puten.

9. Verwendung nach mindestens einem der vorhergehenden Ansprüche, **dadurch gekennzeichnet, dass** das Basisfutter eine Brennwert von 8 MJ bis 20 MJ pro 1 kg Basisfutter aufweist und/ oder das Basisfutter ein bilanziertes Basisfutter gemäß Animal Nutrition Handbook, 3^{rd} Revision, 2014 Section 12, Poultry Nutrition and Feeding ist.

10. Verwendung nach mindestens einem der vorhergehenden Ansprüche, **dadurch gekennzeichnet, dass** das Basisfutter umfasst
i) mindestens ein Getreide, ein Getreidemehl, ein Getreideschrot oder Extrakte hieraus, und/ oder
ii) mindestens einen weiteren Futtermittelzusatz ausgewählt aus der Gruppe Calciumcarbonat, Dicalciumphosphat, Aminosäuren oder Vitamine.

11. Verfahren zur Reduzierung der Feuchtigkeit in Faeces von Geflügel und/oder zur Reduzierung des Stickstoffgehaltes in Faeces von Geflügel, worin eine Zusammensetzung enthaltend Guanidinoessigsäure und Glycin dem Geflügel während der Aufzucht, während der Haltung oder in der Mast des Geflügels bereitgestellt wird zur Aufnahme *ad libitum* für das Geflügel.

## Claims

1. Use of a composition containing guanidino acetic acid and glycine for reducing the moisture in poultry faeces and/or for reducing the nitrogen content in poultry faeces, in each case during rearing, husbandry or fattening of the poultry.

2. Use according to claim 1, **characterised in that** the composition is provided as a solid preparation in a feed for the poultry, and the feed contains a base feed, guanidino acetic acid in a quantity from 0.1 to 5 g per 1 kg base feed and glycine in a quantity from 0.01 to 2.5 g per 1 kg.

3. Use according to claim 1, **characterised in that** the composition is provided as a drink solution for the poultry, and the drink solution contains water, guanidino acetic acid in a quantity from 0.05 to 1.2 g per 1 l water and glycine in a quantity from 0.005 g to 0.12 g per 1 l water.

4. Use according to one of the preceding claims 2 or 3, **characterised in that** the feed or drink solution is provided to the poultry *ad libitum* for nourishment of the poultry.

5. Use according to claim 1, **characterised in that** the composition contains
i) guanidino acetic acid as a free acid or in the form of a salt of this acid, and/or
ii) glycine as a free acid or in the form of a salt of this acid.

6. Use according to any of the preceding claims, **characterised in that** the guanidino acetic acid is used in the form of a salt of guanidino acetic acid, wherein the salt is selected from the group of alkali or earth alkali salts of guanidino acetic acid, in particular sodium guanidino acetate, potassium guanidino acetate, magnesium guanidino acetate or calcium guanidino acetate.

7. Use according to at least one of the preceding claims, **characterised in that** the glycine is used in the form of a salt of glycine, wherein the salt is selected from the group of alkali or earth alkali salts of glycine, in particular sodium glycinate, potassium glycinate, magnesium glycinate or calcium glycinate.

8. Use according to at least one of the preceding claims, **characterised in that** the poultry is selected from the group ducks, geese, chickens, hens, laying hens, broilers, turkey cocks, quail, ostriches and turkey hens.

9. Use according to at least one of the preceding claims, **characterised in that** the base feed has a calorific value from 8 MJ to 20 MJ per 1 kg base feed, and/or the base feed is a balanced base feed according to Animal Nutrition Handbook, 3^{rd} Revision, 2014 Section 12, Poultry Nutrition and Feeding.

10. Use according to at least one of the preceding claims, **characterised in that** the base feed comprises
i) at least one grain, grain meal, coarse grain or extracts thereof, and/or
ii) at least one further feed additive selected from the group calcium carbonate, dicalcium phosphate, amino acids or vitamins.

11. Method for reducing the moisture in poultry faeces and/or for reducing the nitrogen content in poultry faeces, wherein a composition containing guanidino acetic acid and glycine is provided for the poultry during rearing, during husbandry or in fattening of the poultry, for consumption *ad libitum* by the poultry.

## Revendications

1. Utilisation d'une composition contenant de l'acide guanidinoacétique et de la glycine pour réduire l'humidité dans les fèces de la volaille et/ou pour réduire la teneur en azote dans les fèces de la volaille, respectivement pendant l'élevage, pendant la détention ou pendant l'engraissement de la volaille.

2. Utilisation selon la revendication 1, **caractérisée en ce que** la composition est fournie sous forme de préparation solide dans un aliment pour la volaille et l'aliment contient un aliment de base, l'acide guanidinoacétique en une quantité de 0,1 à 5 g par 1 kg d'aliment de base et la glycine en une quantité de 0,01 à 2,5 g par 1 kg d'aliment de base.

3. Utilisation selon la revendication 1, **caractérisée en ce que** la composition est fournie sous la forme d'une solution d'abreuvement pour la volaille et que la solution d'abreuvement contient de l'eau, l'acide guanidinoacétique en une quantité de 0,05 à 1,2 g pour 1 litre d'eau et la glycine en une quantité de 0,005 g à 0,12 g pour 1 litre d'eau.

4. Utilisation selon l'une des revendications 2 ou 3 ci-dessus, **caractérisée en ce que** l'aliment ou la solution d'abreuvement est fourni ad libitum à la volaille pour l'alimentation de la volaille.

5. Utilisation selon la revendication 1, **caractérisée en ce que** la composition comprend
i) l'acide guanidinoacétique sous forme d'acide libre ou sous forme de sel de cet acide et/ou
ii) la glycine sous forme d'acide libre ou sous forme d'un sel de cet acide.

6. Utilisation selon l'une des revendications précédentes, **caractérisée en ce que** l'acide guanidinoacétique est utilisé sous forme d'un sel de l'acide guanidinoacétique, dans lequel ledit sel est choisi dans le groupe des sels alcalins ou alcalino-terreux de l'acide guanidinoacétique, notamment le guanidinoacétate de sodium, le guanidinoacétate de potassium, le guanidinoacétate de magnésium ou le guanidinoacétate de calcium.

7. Utilisation selon l'une au moins des revendications précédentes, **caractérisée en ce que** la glycine est utilisée sous forme d'un sel de la glycine, dans lequel ledit sel est choisi dans le groupe des sels alcalins ou alcalino-terreux de la glycine, notamment le glycinate de sodium, le glycinate de potassium, le glycinate de magnésium ou le glycinate de calcium.

8. Utilisation selon l'une au moins des revendications précédentes, **caractérisée en ce que** les volailles sont choisies parmi les canards, les oies, les poulets, les poules, les poules pondeuses, les poulets de chair, les dindes, les cailles, les autruches et les dindes.

9. Utilisation selon au moins l'une des revendications précédentes, **caractérisée en ce que** l'aliment de base a une valeur énergétique de 8 MJ à 20 MJ par kg d'aliment de base et/ou l'aliment de base est un aliment de base équilibré selon le Animal Nutrition Handbook, 3rd Revision, 2014 Section 12, Poultry Nutrition and Feeding.

10. Utilisation selon au moins l'une des revendications précédentes, **caractérisée en ce que** l'aliment de base comprend
i) au moins une céréale, une farine de céréale, un tourteau de céréale ou des extraits de ceux-ci, et/ou
ii) au moins un autre additif alimentaire choisi dans le groupe constitué par le carbonate de calcium, le phosphate dicalcique, les acides aminés ou les vitamines.

11. Procédé pour réduire l'humidité dans les fèces de volailles et/ou pour réduire la teneur en azote dans les fèces de volailles, dans lequel une composition contenant de l'acide guanidinoacétique et de la glycine est fournie aux volailles pendant l'élevage, la détention ou l'engraissement des volailles pour être ingérée ad libitum par les volailles.
